# EUROPEAN PATENT SPECIFICATION

(11) **EP 4 320 383 B1**
(45) Date of publication and mention of the grant of the patent: **11.02.2026**
(21) Application number: 21725680.9
(22) Date of filing: 08.04.2021
(51) Int. Cl.: F23G 5/26, F23J 1/06

(54) **A REFUSE DERIVED FUEL (RDF) WASTE TO ENERGY PLANT**
ABFALL AUS ABFALLBRENNSTOFF (RDF) FÜR EIN ENERGIEKRAFTWERK
INSTALLATION DE CONVERSION DE DÉCHETS EN ÉNERGIE DE PRODUCTION DE COMBUSTIBLE DÉRIVÉ DE DÉCHETS (RDF)

(43) Date of publication of application: 14.02.2024
(73) Proprietor: Glery Limited, Egkomi, 2408, Nicosia (CY)
(72) Inventor: JONES, Frederick Michael, Guilsfield, Welshpool SY21 9DJ (GB)
(74) Representative: O'Connor, Michael Donal
(86) International application number: PCT/EP2021/059217
(87) International publication number: WO 2022/214185

(56) References cited:
- EP-A1- 1 559 957
- SE-C1- 128 398
- US-A- 4 672 899

## Description

### Technical Field:

This invention relates to a refuse derived fuel (RDF) waste to energy plant, a combustion chamber for such a plant, and a method of operating the combustion chamber.

### Background Art:

In the United Kingdom alone, it is estimated that approximately 8 million tonnes of RDF is sent to landfill each year. Heretofore, the cost of transporting the RDF to a suitable facility has been prohibitively expensive for many waste producers. Often, there is no RDF waste to energy facility in the locality for waste producers to bring their RDF to, thereby significantly increasing transportation costs of the waste if they wish to bring it to the waste to energy plant. In addition, gate fees for handling refuse at landfill sites are steadily increasing and are often expensive in comparison. It would be preferable to use this RDF in a waste to energy facility rather than send it to landfill however there are significant obstacles in the way of waste producers.

As a consequence, a number of smaller scale RDF waste to energy plants have been proposed, offering a useful alternative to the waste producers when handling their waste. These smaller scale RDF waste to energy plants are typically configured to process between 1 tonne/hour to 3 tonnes/hour (8,000 to 24,000 tonnes per annum), depending on the waste content. Indeed, some of the larger producers of waste have taken to commissioning their own on-site waste to energy plant in an effort to handle their waste in a more efficient manner and harness the energy produced by the waste. The energy harnessed may be redirected back into their own processes or may be converted to electricity and exported to the electricity grid.

There is however a problem with the known offerings of smaller scale RDF waste to energy plants. When combusting RDF at smaller scales, the varying amount of mineral content makes maintaining consistent combustion, and indeed consistent combustion without clinker formation, very difficult. This in turn leads to the need for offerings that are expensive, complex, have many moving parts, and have high operation and maintenance costs. Notwithstanding the expense and complexity of the existing offerings, the existing offerings have difficulty maintaining consistent combustion and avoiding clinker formation. As a consequence, the amount of downtime of the smaller scale waste to energy plants for maintenance is comparatively high.

Swedish Patent No. SE128398 is understood to disclose a method for carrying out the combustion of a solid fuel, and an apparatus for the implementation of that process. A pocket is formed in the mass of the fuel and the surface of the pocket is swept by a sheet of air from nozzles in a bell over the pocket. A reciprocating plate is provided for the evacuation of ashes.

United States Patent No. US4672899 discloses an RDF waste to energy plant having a fuel hopper, a fuel delivery system, a combustion stage and a post combustion stage including a generator and an ash removal stage. The combustion stage further comprises a combustion chamber having a fuel inlet for receipt of fuel from the fuel hopper fed by the fuel delivery system, a fuel outlet for delivering the fuel into the combustion chamber, and an ash outlet for delivery of ash to the ash removal stage.

It is an object of the present invention to provide an RDF waste to energy plant, a combustion chamber for such a plant, and a method of operating the combustion chamber that overcome at least some of the above-identified problems. It is a further object of the present invention to provide a useful alternative for the consumer.

### Summary of Invention

In one embodiment of the invention there is provided a combustion chamber for an RDF waste to energy plant according to claim 1.

By having such a combustion chamber, it will be possible to accurately control combustion and prevent the formation of clinker. This in turn will lead to clean combustion and a high degree of emissions control, as well as reduced downtime for maintenance. This is achieved with a construction that is simpler, less expensive and with lower maintenance and operation costs. Advantageously, the present invention is able to process RDF with a high ash content, of the order of 50% ash content, while maintaining clean combustion and avoiding clinker formation.

In one embodiment of the invention there is provided a combustion chamber for an RDF waste to energy plant in which the controller operable to control the depth of the active fluid ash bed comprises means to control the speed of oscillation of the oscillating plates.

In one embodiment of the invention there is provided a combustion chamber for an RDF waste to energy plant in which the controller operable to control the depth of the active fluid ash bed comprises means to control the rate of delivery of fuel into the combustion chamber.

In one embodiment of the invention there is provided a combustion chamber for an RDF waste to energy plant in which the at least one sensor operable to measure the depth of the active fluid ash bed comprises a pair of pressure sensors, one of which is located above the air injection ring and the other of which is located below the air injection ring.

In one embodiment of the invention there is provided a combustion chamber for an RDF waste to energy plant in which the pair of oscillating plates are star shaped.

In one embodiment of the invention there is provided a combustion chamber for an RDF waste to energy plant in which the circumferential edge of each of the oscillating plates has a star-shaped or wave configuration.

In one embodiment of the invention there is provided a combustion chamber for an RDF waste to energy plant in which the diameter of the upper oscillating plate is smaller than the diameter of the lower oscillating plate and in which the peaks of the upper oscillating plate coincide with the troughs of the lower oscillating plate.

In one embodiment of the invention there is provided a combustion chamber for an RDF waste to energy plant in which the fuel outlet comprises a frusto-conical shaped fuel nozzle located centrally in the combustion chamber relative the sides of the combustion chamber.

In one embodiment of the invention there is provided a combustion chamber for an RDF waste to energy plant in which the air injecting ring surrounds the fuel outlet, and comprises a plurality of air nozzles through which air is delivered towards the centre of the combustion chamber.

In one embodiment of the invention there is provided a combustion chamber for an RDF waste to energy plant in which the plurality of air nozzles are inclined, downwardly depending towards the active fluid ash bed.

In one embodiment of the invention there is provided a combustion chamber for an RDF waste to energy plant in which the plurality of air nozzles are circumferentially spaced about the air injection ring.

In one embodiment of the invention there is provided a combustion chamber for an RDF waste to energy plant in which the bottom plate of the pair of oscillating plates oscillates between 0.40m and 0.60m, and the top plate of the pair of oscillating plates oscillates between 0.2m and 0.4m respectively.

In one embodiment of the invention there is provided a combustion chamber for an RDF waste to energy plant in which there are provided clinker breakers on the underside of the air injection ring.

In one embodiment of the invention there is provided a combustion chamber for an RDF waste to energy plant in which the distance between the air injection ring and the top plate of the pair of oscillating plates is between 0.65m and 0.12m.

According to the invention there is provided a refuse derived fuel (RDF) waste to energy plant according to claim 15.

By having such a plant, it will be possible to accurately control combustion and prevent the formation of clinker. This in turn will lead to clean combustion and a high degree of emissions control, as well as reduced downtime for maintenance. This is achieved with a construction that is simpler, less expensive and with lower maintenance and operation costs. Advantageously, the present invention is able to process RDF with a high ash content, of the order of 50% ash content, while maintaining clean combustion and avoiding clinker formation.

In one embodiment of the invention there is provided an RDF waste to energy plant in which the controller operable to control the depth of the active fluid ash bed comprises means to control the speed of oscillation of the oscillating plates. By oscillating the plates, the ash bed is kept fluid, preventing the formation of clinker, and ash is gradually removed from the plates, ensuring clean combustion, before being delivered to an ash removal stage for subsequent disposal.

In one embodiment of the invention there is provided an RDF waste to energy plant in which the controller operable to control the depth of the active fluid ash bed comprises means to control the rate of delivery of fuel from the fuel delivery system to the combustion stage. The content of the RDF can vary greatly, and the rate of combustion can vary accordingly. In this way, the plant will process the RDF in the most efficient manner possible, maintaining clean combustion while avoiding large temperature fluctuations and clinker formation.

In one embodiment of the invention there is provided an RDF waste to energy plant in which the combustion stage further comprises a pre-conditioner. This is seen as a useful aspect of the present invention that will promote more efficient combustion in the RDF waste to energy plant. The pre-conditioner will raise the temperature of the RDF, drying the RDF prior to the RDF being delivered into the combustion chamber. The RDF is preferably heated to of the order of 2/3rds of its gasification temperature before it enters the combustion chamber, thereby improving the combustion and efficiency of the combustion chamber.

In one embodiment of the invention there is provided an RDF waste to energy plant in which the pre-conditioner is operable to heat the fuel to up to 250 degrees Celsius prior to entry of the fuel into the combustion chamber.

In one embodiment of the invention there is provided an RDF waste to energy plant in which heat is harnessed from the combustion chamber for use in the pre-conditioner.

**This is seen** as an effective use of resources and reduces the operating cost of the RDF waste to energy plant. As an alternative or in addition to the foregoing, the rejected heat from the generator may be harnessed. This will give a 300°C flow of clean air which can be circulated through the pre-conditioner to raise the temperature of the fuel in the pre-conditioner to the required level by indirect heat transfer. If the combustion plant is connected to a Blue Box ^{®} Electric generator, it will use the rejected clean air at approximately 300° to 400°C prior to it passing to the air to water heat exchanger for recovery (if on a CHP system). Alternatively, the air can be rejected directly to atmosphere if heat recovery is not required. If the system is not fitted to a Blue Box ^{®} electricity generator, the flue gas will be directed from the boiler to a conditioner prior to the gasses entering a wet scrubber.

In one embodiment of the invention there is provided an RDF waste to energy plant in which the at least one sensor operable to measure the depth of the active fluid ash bed comprises a pair of pressure sensors, one of which is located above the air injection ring and the other of which is located below the air injection ring. This is seen as a particularly simple configuration and advantageous aspect of the present invention. In this way, the depth of the fluid ash bed can be determined reliably with relative ease. The negative pressure above the air injection ring can be compared with the negative pressure below the air injection ring. If the negative pressure below the air injection ring decreases (i.e. the pressure differential increases in relation with the negative pressure above the air injection ring), this will be indicative that the level of the ash bed is rising. This is a very simple, robust and effective way of measuring the depth of active fluid ash bed that leads to improved control of the combustion process.

In one embodiment of the invention there is provided an RDF waste to energy plant in which the pair of oscillating plates are star shaped. By having the pair of oscillating plates star-shaped, with a plurality of fingers splayed outwardly from the centre, this will assist in agitating the ash bed and keeping the ash bed active. In addition, as the plates oscillate in a rotating, circular motion, they will act to break up any clinker that is forming by crushing it between clinker breakers attached to the underside of the air injection (also referred to as combustion) ring. In addition, the star shaped design creates a radial movement of ash due to the interaction of the two plates (also referred to as grates) rotating to different limits. In this way, the ash is moved outwardly towards the edges of the plates towards the drop zone in a controlled manner, allowing sufficient burn out time to combust the remaining carbon element in the fuel. The star shaped plates will provide lateral agitation force to prevent clinker formation and will gradually move the combusted ash from the centre to the extremities.

In one embodiment of the invention there is provided an RDF waste to energy plant in which the circumferential edge of each of the oscillating plates has a wave configuration. Again, by having the wave configuration, this will keep the ash agitated and fluid, allowing the ash to be moved to the periphery of the plates by the relative movement between the two plates. The wave configuration will also prevent hot spots and stress points.

In one embodiment of the invention there is provided an RDF waste to energy plant in which the diameter of the upper oscillating plate is smaller than the diameter of the lower oscillating plate and in which the peaks of the upper oscillating plate coincide with the troughs of the lower oscillating plate.

In one embodiment of the invention there is provided an RDF waste to energy plant in which the fuel outlet comprises a frusto-conical shaped fuel nozzle located centrally in the combustion chamber relative the sides of the combustion chamber. This is seen as a useful configuration to promote even distribution of the RDF in the combustion chamber. The RDF will, as it exits the nozzle, slide down the sides of the nozzle towards the oscillating plates. This will also prevent collection of RDF at the base of the nozzle and directs the RDF away from the nozzle.

In one embodiment of the invention there is provided an RDF waste to energy plant in which the air injecting ring surrounds the fuel outlet, and comprises a plurality of air nozzles through which air is delivered towards the centre of the combustion chamber.

In one embodiment of the invention there is provided an RDF waste to energy plant in which the plurality of air nozzles are inclined, downwardly depending towards the active fluid ash bed. By directing the multiple air inlets into the fuel mass, a number of high combustion zones are created. These zones are relatively simple to control and as the plates oscillate, the zones are moved across the fuel mass thereby eliminating hot spots.

It is envisaged that the nozzles may be configured to provide horizontal flow of air (e.g. zero degree deflection to of the order of 45 degree downward deflection). This degree of adjustability will further allow for fine tuning depending on the constitution of the fuel being burnt. This will further allow the amount of air entrained in the surface of the RDF to be maximized for better combustion which will reduce fly ash production.

In one embodiment of the invention there is provided an RDF waste to energy plant in which the plurality of air nozzles are circumferentially spaced about the air injection ring. In this way, the air from the air nozzles will be distributed more evenly in the combustion chamber, promoting more even distribution of air in the chamber and a more even combustion. This will facilitate combustion control including temperature control.

In one embodiment of the invention there is provided an RDF waste to energy in which the plurality of air nozzles are spaced apart by a distance between 0.05m and 0.15m. Preferably, the plurality of air nozzles are spaced apart by a distance of 0.1m (100mm). A 0.1m separation is believed to suit many different fuel types however if the fuel has a high percentage of small and fine material, a separation of 0.05m (50mm) would be preferable. It is envisaged that air nozzles could be opened or closed to ensure that the desired amount of air is delivered as required. For the purposes of this specification, small material will be understood to mean particle sizes of between 5mm (0.005m) to 10mm (0.01m) in diameter, and fine material will be understood to mean material particle sizes from dust up to 5mm (0.005m) in diameter.

In one embodiment of the invention there is provided an RDF waste to energy plant in which each of the air nozzles has a nozzle outlet diameter of between 0.004m and 0.015m.

In one embodiment of the invention there is provided an RDF waste to energy plant in which the ash removal stage comprises a water-filled wet ash removal stage beneath the pair of oscillating plates. A water-filled wet ash removal stage is seen as useful as it will provide a useful way of preventing fly-away of ash and a cleaner environment in the plant. The water-filled wet ash removal stage will also provide an air seal between the plant and the combustion chamber. The water level is approximately 0.2m (200mm) below the level of the grate and only recovers heat from the ash as the water enters below the grate. The outer shell of the ash tank is sufficiently large to provide cooling to the water. Furthermore, fresh water is added to replace the water carried away by the ash as it is removed and this provides additional cooling. In addition to the foregoing, the water utilized in the wet flue scrubber may be cooled prior to being returned to the wet ash system.

In one embodiment of the invention there is provided an RDF waste to energy plant in which the water from the wet ash removal stage is delivered to the flue scrubber for use in neutralizing flue gasses and removing heavy metals in the flue gas. This is seen as a useful function for the water from the wet ash as the water will be alkaline in nature and suitable for removing heavy metals and neutralizing flue gas acids, principally SO₂ and HCl. This will help to reduce the overall cost of operation of the plant.

In one embodiment of the invention there is provided an RDF waste to energy plant in which the generator comprises an Organic Rankine Cycle (ORC) generator. An ORC generator is seen as a particularly suitable choice as it uses an expander turbine coupled to a high-speed alternator to get electricity from the heat generated by the combustion chamber. In addition to the foregoing, there may be provided an air to air high temperature turbine electrical generation option where heat recovery is not required.

In one embodiment according to the invention, a hot air turbine generator is employed to produce electrical power without the use of liquids to transfer the heat to the generator. This provides a safer plant. The clear hot air waste stream may then be utilized as the heat source for the fuel pre-conditioner.

In one embodiment of the invention there is provided an RDF waste to energy plant in which the flue gas scrubber comprises a condenser. The use of a condenser will ensure a cleaner plume from the flue that will be practically imperceptible. A clean hot airstream is recovered from the flue gas prior to entry to the flue gas scrubber, before being reintroduced to the flue above the Continuous Emissions Monitoring System (CEMS) emissions test ports. In this way, the pluming effect commonly seen emitting from flue exhausts is obviated.

In one embodiment of the invention there is provided an RDF waste to energy plant in which the bottom plate of the pair of oscillating plates oscillates between 0.40m and 0.60m, and the top plate of the pair of oscillating plates oscillates between 0.2m and 0.4m respectively. The spacings between the individual fingers of the plates are approximately 0.2m (200mm), measured center to center of the tips of the fingers.

In this way, the upper plate has the required amount of movement to travel the width between the fingers of the bottom plate. The circumferential distance between the fingers of the bottom plate are the same as the distance between the fingers of the top plates at the same radial distance from a common centre so that the difference of rotation causes the top finger to move across the entire width of the space between two adjacent bottom fingers. If only one plate oscillated, there would be no interaction or agitation and the ash bed would cease to become active. Large clinker deposits would form and block the system. By rotating the plates in the manner described, the plates will operate in a simple, reliable and robust manner while providing sufficient agitation to the fluid bed.

The distance of movement is designed that the top plate finger moves across from one of the lower fingers to the adjacent finger so sweeping the entire width of the lower trough. If the top plate was fixed, the ash would bridge and form clinker. The interaction of the two plates is essential for the maintenance of a fluid ash bed. The plates do not necessarily counter rotate, rather the bottom plate moves through the full arc and the top plates movement (which is driven by frictional contact to the bottom plate) is limited to the dimension of the width of the lower plate.

In one embodiment of the invention there is provided an RDF waste to energy plant in which there are provided clinker breakers on the underside of the air injection ring. The clinker breakers comprise fixed solid bars of 0.025m (25mm) x 0.05m (50mm) chrome alloy fixed to the underside of the base ring of the air injection ring. They prevent the ash rotating as one mass on top of the lower plate and also prevent wear of the air injection (combustion) ring by preventing the rotating action of ash against the combustion ring. The clinker breakers may comprise solid chrome alloy vertical lugs approximately 20mm thick that are attached to the underside of the combustion ring and engage with the ash to prevent it rotating with the plates. This allows the plates to break any clinker that is trapped between the clinker breakers and the edge of the fingers of the grate.

In one embodiment of the invention there is provided an RDF waste to energy plant in which the distance between the air injection ring and the top plate of the pair of oscillating plates is between 0.065m and 0.12m. A standard multipurpose setting is 80mm. The distance will be set to suit the fuel type to be combusted in the energy plant. An energy plant that will burn finer material, typically material having a diameter of 15mm and below, can have a smaller gap than an energy plant that is typically used to burn larger waste sizes. The distance is measured from the top of the top oscillating plate to the bottom of the air ring and can be adjusted by insertion or removal of flange packing shims.

There is no strict formula regarding the distance between the air injection ring and the plates, and distances can be established using trial and error. Importantly, the system has been designed to allow this distance to be adjusted should a specific fuel require different settings.

In one embodiment of the invention there is provided a method of operating a combustion chamber of an RDF waste to energy plant comprising the steps of: providing an active fluid ash bed with a pair of oscillating plates, the oscillating plates superimposed one on top of the other; oscillating the pair of oscillating plates; monitoring the depth of ash of the fluid ash bed on the oscillating plates; and controlling the intake of fuel into the combustion chamber to prevent the depth of the active fluid ash bed exceeding a set fluid bed depth parameter. Preferably, the set fluid bed depth parameter is of the order of 50mm (0.05m).

By having such a combustion chamber, it will be possible to accurately control combustion and prevent the formation of clinker. This in turn will lead to clean combustion and a high degree of emissions control, as well as reduced downtime for maintenance. This is achieved with a construction that is simpler, less expensive and with lower maintenance and operation costs. Advantageously, the present invention is able to process RDF with a high ash content, of the order of 50% ash content, while maintaining clean combustion and avoiding clinker formation.

In one embodiment of the invention there is provided a method of operating a combustion chamber of an RDF waste to energy plant in which the method comprises the step of monitoring the temperature of the combustion chamber and injecting air into the combustion chamber in order to keep the temperature at or above a desired temperature parameter.

In one embodiment of the invention there is provided a method of operating a combustion chamber of an RDF waste to energy plant in which the air is injected into the combustion chamber horizontally or inclined downwardly towards the fluid ash bed.

### Brief Description of the Drawings:

The invention will now be more clearly understood from the following description of some embodiments thereof given by way of example only with reference to the accompanying drawings, in which:-
Figure 1 is a perspective view of part of the RDF waste to energy plant according to the invention;
Figure 2 is a diagrammatic representation of the components of the RDF waste to energy plant according to the invention;
Figure 3 is a side cross-sectional view of the combustion chamber according to the invention;
Figure 4 is a plan view of the pair of oscillating plates forming the moving grate along the lines III-III of Figure 3;
Figure 5 is a top plan view of the air injection ring;
Figure 6 is a bottom plan view of the air diffuser plate with its cover plate removed;
Figure 7 is a bottom plan view of the air diffuser with its cover plate attached; and
Figure 8 is a perspective view of the ash removal stage of the RDF waste to energy plant according to the invention.

### Detailed Description of the Drawings:

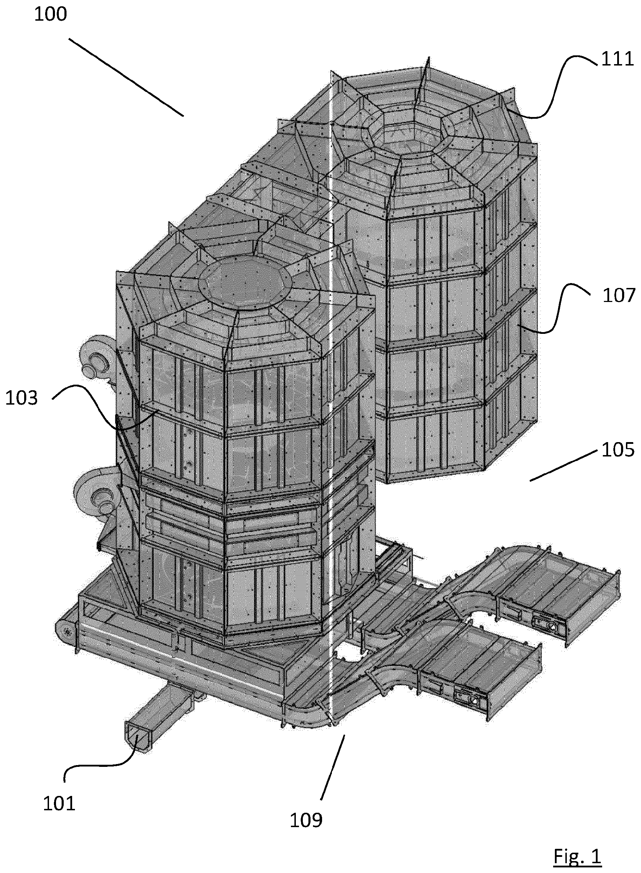

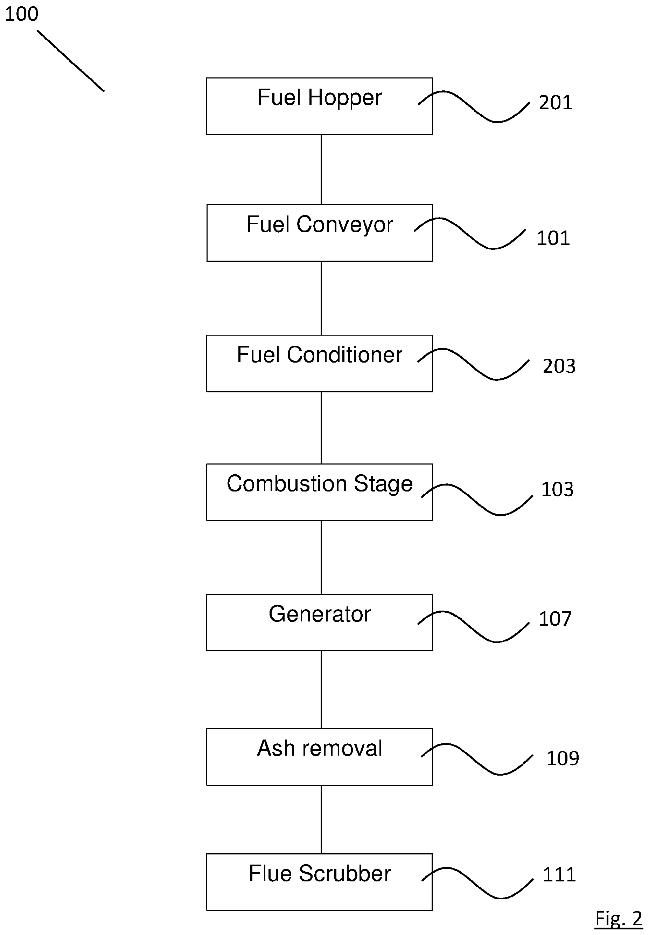

Referring to Figures 1 and 2, there is shown a refuse derived fuel (RDF) waste to energy plant, indicated generally by the reference numeral 100, comprising a fuel delivery system 101, a combustion stage 103 and a post combustion stage 105. The post combustion stage comprises a generator 107, an ash removal stage 109 and a flue gas scrubber 111. Referring specifically to Figure 2, there is further provided a fuel hopper 201 and a fuel conditioner 203. The fuel conditioner is not seen as essential and may be omitted in certain embodiments of the invention.

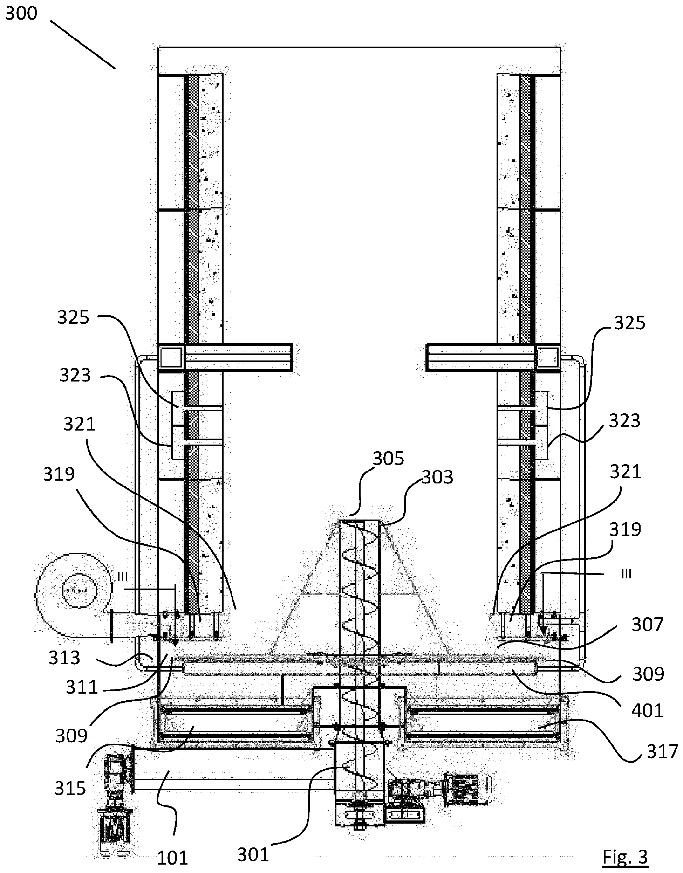

In use, RDF is delivered from a fuel hopper 201 or other repository along a fuel conveyor of the fuel delivery system 101 to a fuel conditioner 203. The RDF is dried in the fuel conditioner and heated to up to of the order of 200°C to 250°C. In this way, the RDF is brought to a temperature of the order of 50% of its gasification temperature. Gasification typically starts at approximately 500°C. The fuel travels from the fuel conditioner along a conveyor of the fuel delivery system 101 to the combustion stage 103. The combustion stage comprises a combustion chamber in which the RDF is heated to of the order of 850°C for at least 2 seconds. The combustion chamber and its operation will be described in more detail below with reference to Figures 3 to 7 inclusive. The heat and flue gases generated by the burning RDF are transferred from the combustion chamber to the generator 107 and the flue gas scrubber 111, respectively, for conversion into electricity and for cleaning prior to being released into the atmosphere. The ash from the combustion chamber is delivered through an ash outlet (not shown) to an ash removal stage 109 where the ash is collected for subsequent disposal.

The generator 107 is preferably an Organic Rankine Cycle (ORC) generator. The ORC uses an expander turbine coupled to a high speed alternator to produce electricity with a high degree of efficiency. The electricity may be used in the facility or exported to the national electricity grid. Alternatively, the generator may be provided by a hot air turbine to generate electricity.

The flue gas scrubber 111 comprises a flue gas cleaning and heat exchanger system such as that produced by Woodtek Engineering Ltd of Welshpool Great Britain. The flue gas scrubber is operable to remove harmful gasses and heavy metals from the flue gas and treat the flue gasses so that they are effectively colourless as they exit the flue. The generator 107 and the flue gas scrubber 111 are shown housed together however this is not essential.

The ash removal storage stage 109 comprises a wet conveyor that the ash falls onto (as will be described in more detail below) and is carried by, as the ash is delivered away from the combustion chamber to an ash repository.

Referring now to Figure 3, there is shown a cross sectional view of the combustion chamber, indicated generally by the reference numeral 300. The combustion chamber is constructed using high grade steel combined with monolithic refractory lining and insulation. RDF that has been treated in the pre-conditioner is delivered to the combustion chamber 300 along the fuel delivery system 101 to a screw auger 301. Once there, the RDF is progressed up along the screw auger as it rotates through a fuel outlet nozzle 303. The fuel nozzle 303 is substantially frusto-conical in shape with a discharge outlet 305 at is centre.

When the RDF exits the discharge outlet, the RDF falls along the sides of the fuel nozzle towards an active fluid ash bed (not shown) on a pair of oscillating plates 307, 309. The pair of oscillating plates 307, 309 are actuated with the effect that the ash moves towards the periphery of the oscillating plates towards a gap 311 between the lower oscillating plate 309 and the side wall 313 of the combustion chamber. From there, the ash falls down onto one of a pair of wet ash conveyors 315, 317 to be carried away from the combustion chamber.

Importantly, there is an air injection ring 319 having a plurality of air nozzles 321 surrounding the outlet nozzle 303, and positioned above and spaced apart from the pair of oscillating plates. The air nozzles 321 are shown downwardly depending towards the active fluid ash bed however this is not necessarily limiting. The temperature of combustion will be regulated in part by the introduction of air. The distance between the air injection ring and the top plate of the pair of oscillating plates is between 0.065m and 0.12m (65mm to 120mm).

In addition, there is provided a plurality of secondary air inlets 323 circumferentially spaced around the combustion chamber, and a plurality of flue gas recirculation inlets 325 circumferentially spaced around the combustion chamber. In the embodiment shown in Figure 3, the flue gas recirculation inlets 325 are positioned above the secondary air inlets. The secondary air inlets and the flue gas recirculation inlets are offset to the radial direction so that air entering into the combustion chamber through the secondary air inlets and the flue gas recirculation inlets will form a vortex flow around the fuel discharge outlet 305.

It is envisaged that the standard distance between the air injection ring and the top plate of the pair of oscillating plates will be 80mm (0.08m) as this has proven to be the optimum spacing to cover the widest variety of fuels tested. The standard diameter of the air nozzle outlets is preferably 8mm (0.008m). This configuration provides an even ring of airstream flow that can be controlled very accurately to the primary combustion zone. In this way, it is possible to control the combustion temperature of different fuels very accurately.

The combustion temperature is controlled by monitoring the furnace temperature immediately above the combustion ring and the differential pressure in the combustion chamber. More specifically, the temperature of the whole primary combustion zone as well as the pressure differential between a point below the combustion ring and a point above the combustion ring can be used to good effect. When the pressure decreases below the combustion ring, the fan speed will increase to increase the combustion rate. Additionally, should the furnace temperature rise above the pre-set limit of 1100°C then the fuel feed rate will be reduced. By adjusting these two parameters, it is possible to maintain the correct depth of ash in the grate as well as the set temperature point, normally of the order of 750°C to 800°C. The volume of air delivered to the air ring is controlled by the inverter speed of the primary air fan and this adjusts automatically to match the fuel feed rate. The upper and lower limits are set for each fuel on commissioning.

The ring of secondary air inlets 323 are located between 500mm and 1.2 m above the primary air combustion ring (depending on the size of the model of combustion chamber),. The secondary air inlets are configured so that the air passing through the inlets enters the combustion zone at an angle to create a circular vortex of the combustion gases to mix the combustion gases to ensure complete combustion and eliminating hot and cold spots in the combustion zone. The diameter of the inlets vary according to the combustor capacity. The larger the combustion chamber, the larger the inlets.

The base level of volume of secondary combustion air delivered to the combustion chamber is set on commissioning of different fuels in the combustion chamber to achieve a desired O₂ content of the combustion gas. It will be understood that different fuels and different fuel conditions will require different levels of added oxygen in order to ensure efficient combustion. Additionally, there is provided an auto trim control that automatically trims the volume of secondary air delivered into the combustion chamber to maintain the desired set O₂ level. In some embodiments, an O₂ level (volume) of between 8% and 12% of the total combustion gas volume has been found to be effective, particularly for CEMS calibration.

Immediately above the secondary air inlets 323 there is a ring of flue gas inlets 325 to allow cool clean flue gas to be injected into the combustion chamber to control the intensity and temperature of the combustion and to accurately maintain the optimum combustion temperature throughout the furnace.

In addition to the foregoing, it will be understood that there is also provided under grate primary air which is used to deliver cooling air to the plates, as well as to ensure optimum burn out of the carbon in the ash prior to the ash dropping into the wet ash. The rate of under grate air injection is linked to the fuel feed rate and is set at fuel commissioning. The air is introduced between the upper and lower oscillating plates. The quantity of air set at commissioning is set by the commissioning engineer using O₂ ,CO ,NOx and SO₂ levels in the flue gas to develop the right balance.the present invention provides the technician with the technology to be able to achieve the required combustion parameters with ease.

The secondary air injection, at approximately the height of the fuel outlet nozzle, primarily combusts the syngas. The syngas is the CO and H₂ elements separating from the fuel and combusting above the fuel in the middle and upper region of the primary combustion chamber. The syngas is separated from the fuel as it passes down the slope to the ash bed. The heat generated in this stage drives the gasification process and the majority of the syngas is driven out of the fuel prior to it entering the combustion ring ash bed zone. This then allows the temperature of the combustion of the ash bed to remain below 750°C, preferably 700°C, which is instrumental in avoiding clinker formation.

The secondary air is controlled at least in part by the exhaust gas lambda sensor which measures the O₂ content, relays the information back to the control panel, which then increases or decreases the secondary air fan speed to automatically adjust the amount of air injected. This ensures that correct amount of oxygen is injected for complete combustion to take place. Depending on the fuel being burnt, the range for optimum combustion may be between 7 and 12 percent O₂ content in the exhaust gas, If the O₂ content is too high, blue smoke is produced and the CO level will be high. If the O₂ content is too low, black smoke is produced and again the CO level will be high.

The furnace temperature may be controlled by one of two methods. First of all, the furnace temperature may be controlled by adjusting the moisture content in the fuel conditioner to achieve the optimum moisture content to maintain the desired furnace temperature. For example, drier fuel will increase the furnace temperature whereas more moist fuel will decrease furnace temperature. The fuel conditioner will add moisture or reduce moisture when required and is controlled by the system logic taking the furnace temperature as its data input. For example, it is envisaged that there may be a set minimum moisture content of the fuel set at 15% by weight of the fuel. If the moisture content is below 15%, water will be added to the fuel. In other cases, the fuel may be dried to reduce the moisture content.

The second way in which the furnace temperature may be controlled is by flue gas recirculation. With flue gas recirculation, cool, clean flue gas recovered after the flue gas scrubber is injected both under the plates which dilutes the primary oxygen and reduces the combustion temperature. In addition, flue gas is also introduced adjacent to the secondary air injection points to reduce the secondary combustion temperatures. The rate is adjusted by the furnace temperature and data from a CEMS emissions monitor (not shown). The amount is set and balanced on fuel commissioning. Due to the fact that the flue gas is exhaust gas with low O₂ content, this involves recirculation of cool gas that does not combust and so cools the combustion temperature. As the furnace temperature is the prime controller of O₂ volume, the level of NOx detected by the CEMS is the secondary indicator and is only used during commissioning to establish the optimum target furnace temperature.

The combustion inside the combustion chamber is a two-stage combustion process, in which the volatile gasses are separated from the carbons in the fuel source. The carbons are combusted at a relatively low temperature of the order of 700°C°C with limited oxygen on the active fluid ash bed. In this way, the complete combustion of the fuel source is ensured and clinker formation is avoided. The primary combustion area above the fuel source is where the volatile gasses are combusted. This combustion typically takes place at a temperature between 900°C and 950°C. If the combustion temperature falls below 850°C, the auxiliary burner will be activated and hot gas will be introduced into the combustion chamber to compensate and increase the combustion temperature. This will ensure compliance with the IED combustion regulations (Directive 2010/75/EU of the European Parliament and the Council on industrial emissions).

If the combustion temperature falls below the required temperature, the flue gas recirculation volume is reduced to balance the temperature. If the temperature remains under 850°C after flue gas is reduced to the minimum amount, woodchip is automatically added to the fuel feed to increase the calorific value to maintain the temperature. If the temperature remains under 850°C, the diesel burner is ignited and the combustor moves to shutdown after a set period.

A plurality of sensors (not shown) are located inside the combustion chamber including a temperature sensor, and a pair of pressure sensors. One pressure sensor is located above the air injection ring and the second pressure sensor is located below the air injection ring adjacent the gap 311 between the lower oscillating plate 309 and the side wall 313 of the combustion chamber. The pressure sensors are operable to measure the negative pressure at those locations. The measurements from the pressure sensors may thereafter be used to determine the depth of the active fluid ash bed, as will be described in more detail below.

The pressure sensors will be used to detect a change in the pressure (the pressure differential) between the upper pressure sensor and the lower pressure sensor. The higher the active fluid ash bed is, the higher the pressure recorded by the lower pressure sensor will be. Therefore, if the pressure sensed by the lower pressure sensor should reach a given level, particularly relative to the pressure sensed by the upper pressure sensor, this will be indicative that the active fluid ash bed has reached a certain height. If the fluid ash bed is too high, there is a danger that clinker will form. The operator can take corrective action, automatically through a programmed controller, to reduce the height of the fluid ash bed by increasing the speed of oscillation of the pair of oscillating plates and/or reducing the rate of fuel feed until the fluid bed level has decreased to a desired level. In addition to the foregoing, there is further provided a temperature sensor in the furnace wall above the combustion ring. This will detect if the ash level rises above a pre-determined maximum (detected by a drop in temperature in the furnace) and will stop the fuel feed until the temperature rises again as the ash level drops.

By operating the combustion chamber in this manner, it is possible to combust RDF with a very high ash content, up to 50% ash content. This was not heretofore possible with the existing offerings. By closely managing the temperature of combustion and by managing the depth of the fluid ash bed, clinker formation is significantly reduced if not eradicated, thereby obviating the need to replace furnace grates as often as would otherwise be the case and increasing the number of combustion hours (and hence efficiency of the plant).

The spacing between the primary air injection ring and the pair of oscillating plates may be varied depending on the particle size of the RDF. The standard setting for RDF that has been shredded and screened to a size of the order of 50mm and below is 60mm. The standard setting for RDF that has been shredded and screened to a size of the order of 80mm and below is 90mm. The standard setting for RDF that has been shredded and screened to a size of the order of 100mm and below is 120mm. This is to ensure any large non-combustible elements in the fuel, for example, rocks, stones and metals, can pass between the combustion ring and the oscillating plates and not cause a blockage. For other materials, such as woodchip and the like, the same applies however if the fuel is of small size (50mm or less), then the minimum spacing setting of 50mm would be used.

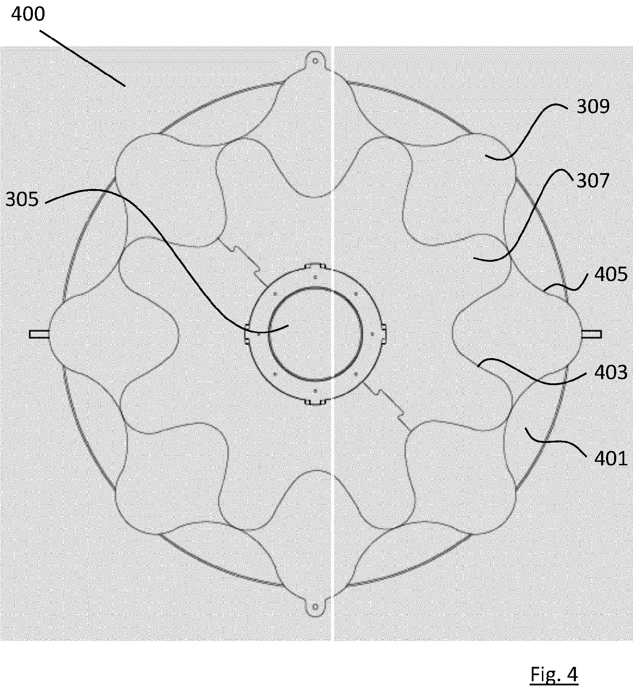

Referring now to Figure 4, there is shown is a plan view of the pair of oscillating plates forming the moving grate 400, along the lines III-III of Figure 3. It can be seen from Figure 3 that the pair of oscillating plates 307, 309 are substantially star shaped and are mounted over a stationary base plate 401. The circumferential edge 403, 405 of each of the oscillating plates has a wave configuration with peaks and troughs. As can be seen from Figure 4, the upper oscillating plate 307 is smaller in diameter than the diameter of the lower oscillating plate 309 and in which the peaks of the upper oscillating plate coincide with the troughs of the lower oscillating plate.

In use, the design of the plates is such that the main ash mass sits on the top plate and during the first part of rotation, both plates rotate together thus moving the entire ash volume at approximately 60% of the set rotation distance. The upper plate reaches a fixed stop which prevents further rotation of the top plate. The lower plate continues to rotate by the remaining approximately 40% of the set rotation angle/distance. As the lower plate continues to rotate, the ash in contact with the lower plate will be moved under the weight of the ash on the upper plate. In this way, the ash is agitated and remains fluid, and will move radially outwardly towards the drop zone at the periphery of the plate.

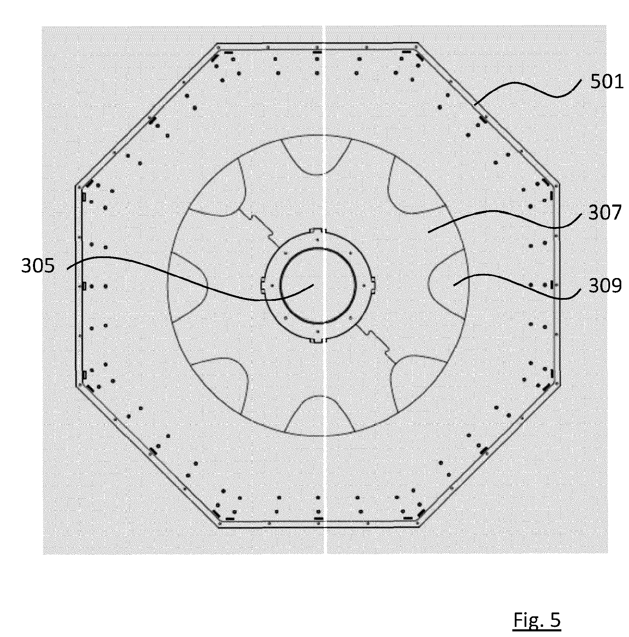

Referring to Figure 5, there is shown a top plan view of the air injection ring 309. In use, RDF travels up the screw auger and passes out of the fuel outlet 305 from where it falls between the inner lip 503 of the air diffuser plate 501 and the fuel nozzle onto the upper oscillating plate 307.

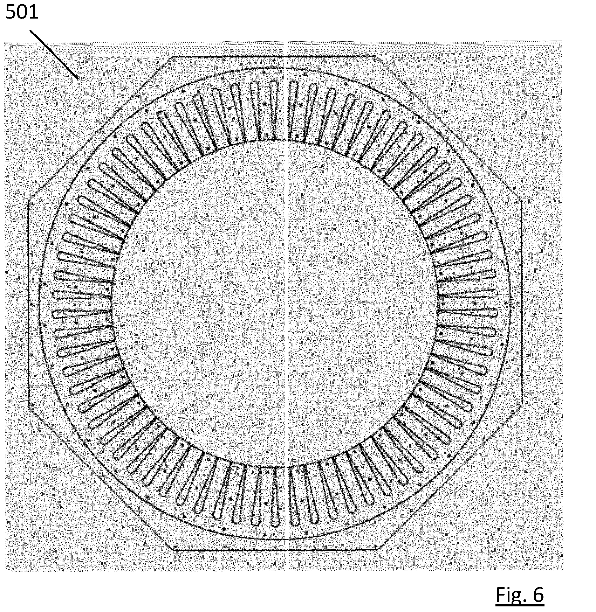

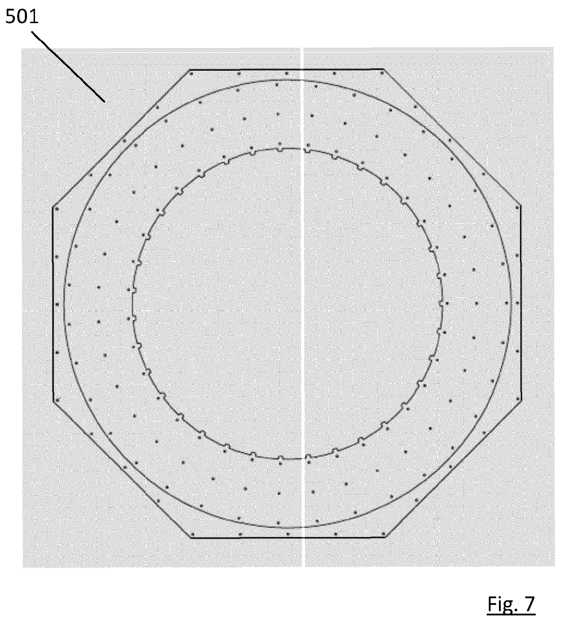

Referring to Figures 6 and 7, there is shown a bottom plan view of the air diffuser plate 501 with its cover plate removed, and a bottom plan view of the air diffuser plate 501 with the cover plate in position, respectively. In Figure 6, it can be seen that there are a number of air outlets spaced evenly, circumferentially around the air diffuser plate. There are provided a plurality of air channels/air ducts feeding the air outlets. In use, air enters the air ducts from a chamber (not shown) on the outside of the combustion ring, passes along the air ducts and exits from the air outlets. In Figure 7, there is shown a bottom plan view of the air diffuser plate with the cover plate in position. The clinker breakers (not shown) are welded to the underside of this cover plate. In this way, the entire component may be removed and replaced due to wear and tear without requiring the remainder of the air injection ring to be removed.

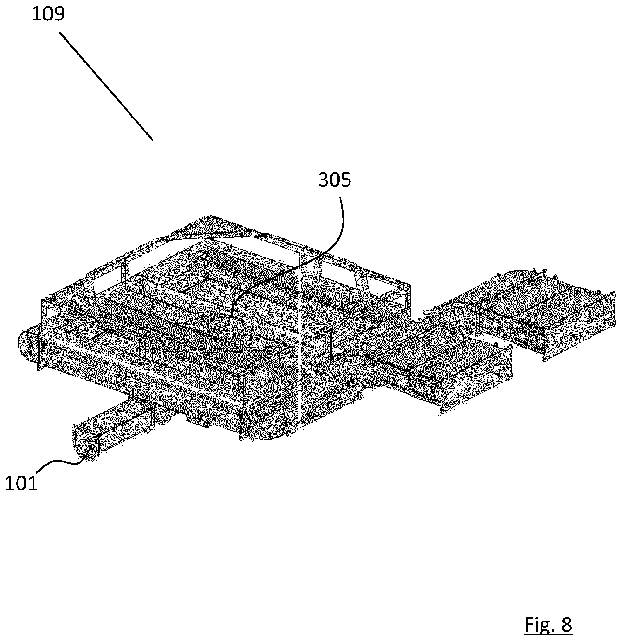

Finally, referring to Figure 8, there is shown a perspective view of the ash removal stage 109 of the RDF waste to energy plant according to the invention. The wet ash removal stage 109 comprises a pair of wet conveyors 801, 803 on which the ash is transported to an ash repository.

It will be understood that the present invention also comprises a programmable controller with computer program instructions loaded thereon, that receives measurements from the pressure sensors and the temperature sensor and operates one or more of the screw auger, the oscillating plates, and the air injection ring to keep the temperature in the combustion chamber at a relatively stable temperature. In this way, the combustion is "clean", burning off many of the most harmful toxins, harnessing the optimum amount of energy from the RDF and preventing the generation of clinker. This is highly advantageous due to the variable nature of the RDF material content. In addition, there is provided a gas burner (not shown) operable to get the combustion chamber up to temperature on start up.

Some examples of air injection content (primary, secondary and flue gas recirculation) and burning temperatures, fluid ash bed depth and oscillation speeds of the plates will now be provided by way of example, merely to give an indication of some operating parameters that are suitable depending on fuel type and consistency. Other parameters would suit other fuels with different moisture and ash content levels.

### Example 1:

An RDF with a moisture content of 15% and an ash content of 15% was processed using the following parameters: Fan speeds: Primary air 45%; Secondary air 20 to 60% (controlled by Oxygen level); Flue gas recirculation 65%. The primary Combustion temperature was 900°C, the fluid ash bed depth was 50mm, and the grate oscillation time delay was set at between 60 seconds to 90 seconds.

### Example 2:

An RDF with a moisture content of 30%, and an ash content of 30% was processed using the following parameters: Fan speeds: primary air 55%; secondary air 20 to 60%; and flue gas recirculation 20%. The
primary combustion temperature was 900°C, the fluid ash bed depth was 50mm, and the grate oscillation time delay was set at between 35 seconds to 65 seconds.

### Example 3:

An RDF with a moisture content of 10%, and an ash content of 5% was processed using the following parameters:
Fan speed: primary air 40%; secondary air 10 to 60 %; and flue gas recirculation 85%. Water was added in the amount of 50kg /tonne fuel. The primary combustion temperature was 900°C, the fluid ash bed depth was 50mm, and the grate oscillation time delay was set at between 150 seconds to 180 seconds.

In this specification the terms "comprise, comprises, comprised and comprising" and the terms "include, includes, included and including" are all deemed interchangeable and should be afforded the widest possible interpretation. The invention is not limited to the embodiment hereinbefore described but may be varied in both construction and detail within the scope of the appended claims.

## Claims

1. A combustion chamber (300) for an RDF waste to energy plant comprising: a fuel inlet for receipt of fuel; a fuel outlet (305) for delivering fuel into the combustion chamber; an ash outlet; the combustion chamber (300) being configured to provide an active fluid ash bed with a pair of oscillating plates (307, 309), the oscillating plates (307, 309) being superimposed one on top of the other; an air injection ring (319) positioned above and spaced apart from the pair of oscillating plates (207, 309); at least one sensor operable to measure the depth of the active fluid ash bed; and a controller, responsive to the at least one sensor and operable to control the depth of the active fluid ash bed.

2. A combustion chamber (300) for an RDF waste to energy plant as claimed in claim 1 in which the controller operable to control the depth of the active fluid ash bed comprises means to control the speed of oscillation of the oscillating plates (307, 309).

3. A combustion chamber (300) for an RDF waste to energy plant as claimed in claim 1 or 2 in which the controller operable to control the depth of the active fluid ash bed comprises means to control the rate of delivery of fuel into the combustion chamber.

4. A combustion chamber (300) for an RDF waste to energy plant as claimed in any one of claims 1 to 3 in which the at least one sensor operable to measure the depth of the active fluid ash bed comprises a pair of pressure sensors, one of which is located above the air injection ring (319) and the other of which is located below the air injection ring (319).

5. A combustion chamber (300) for an RDF waste to energy plant as claimed in any one of claims 1 to 4 in which the pair of oscillating plates (307, 309) are star shaped.

6. A combustion chamber (300) for an RDF waste to energy plant as claimed in any one of claims 1 to 5 in which the circumferential edge (403, 405) of each of the oscillating plates (307, 309) has a wave configuration.

7. A combustion chamber (300) for an RDF waste to energy plant as claimed in any one of claims 1 to 6 in which the diameter of the upper oscillating plate (307) is smaller than the diameter of the lower oscillating plate (309) and in which the peaks of the upper oscillating plate coincide with the troughs of the lower oscillating plate.

8. A combustion chamber (300) for an RDF waste to energy plant as claimed in any one of claims 1 to 7 in which the fuel outlet (305) comprises a frusto-conical shaped fuel nozzle (303) located centrally in the combustion chamber (300) relative the sides of the combustion chamber.

9. A combustion chamber (300) for an RDF waste to energy plant as claimed in any one of claims 1 to 8 in which the air injecting ring (319) surrounds the fuel outlet (305), and comprises a plurality of air nozzles (321) through which air is delivered towards the centre of the combustion chamber.

10. A combustion chamber (300) for an RDF waste to energy plant as claimed in any one of claims 1 to 9 in which the plurality of air nozzles (321) are inclined, downwardly depending towards the active fluid ash bed.

11. A combustion chamber (300) for an RDF waste to energy plant as claimed in any one of claims 1 to 10 in which the plurality of air nozzles (321) are circumferentially spaced about the air injection ring (319).

12. A combustion chamber (300) for an RDF waste to energy plant as claimed in any one of claims 1 to 11 in which the bottom plate (309) of the pair of oscillating plates (307, 309) oscillates between 0.40m and 0.60m, and the top plate (307) of the pair of oscillating plates (307, 309) oscillates between 0.2m and 0.4m respectively.

13. A combustion chamber (300) for an RDF waste to energy plant as claimed in any one of claims 1 to 12 in which there are provided clinker breakers on the underside of the air injection ring (319).

14. A combustion chamber (300) for an RDF waste to energy plant as claimed in any one of claims 1 to 13 in which the distance between the air injection ring (319) and the top plate (307) of the pair of oscillating plates (307, 309) is between 0.05m and 0.12m.

15. A refuse derived fuel (RDF) waste to energy plant (100) comprising:
a fuel hopper (201);
a fuel delivery system (101);
a combustion stage (103);
a post combustion stage (105), the post combustion stage including: a generator (107); an ash removal stage (109);; and in which the combustion stage comprises:
a combustion chamber (300), the combustion chamber having: a fuel inlet for receipt of fuel from the fuel hopper fed by the fuel delivery system; a fuel outlet (305) for delivering the fuel into the combustion chamber; and an ash outlet for delivery of ash to the ash removal stage; **characterised in that**:
the post combustion stage further comprises a flue gas scrubber (111); and in which
the combustion chamber is the combustion chamber (300) according to claim 1.

16. An RDF waste to energy plant (100) as claimed in claim 15 in which the controller operable to control the depth of the active fluid ash bed comprises means to control the speed of oscillation of the oscillating plates (307, 309).

17. An RDF waste to energy plant (100) as claimed in claim 15 or 16 in which the controller operable to control the depth of the active fluid ash bed comprises means to control the rate of delivery of fuel from the fuel delivery system (101) to the combustion stage (103).

18. An RDF waste to energy plant (100) as claimed in any one of claims 15 to 17 in which the combustion stage (103) further comprises a pre-conditioner (203).

19. An RDF waste to energy plant (100) as claimed in claim 18 in which the pre-conditioner (203) is operable to heat the fuel to up to 250 degrees Celsius prior to entry of the fuel into the combustion chamber (300).

20. An RDF waste to energy plant (100) as claimed in claim 18 or 19 in which heat is harnessed from the combustion chamber (300) for use in the pre-conditioner (203).

21. An RDF waste to energy plant (100) as claimed in claim 18 or 19 in which heat is harnessed from the generator (107) for use in the pre-conditioner (203).

22. An RDF waste to energy plant (100) as claim in any one of claims 15 to 21 in which the at least one sensor operable to measure the depth of the active fluid ash bed comprises a pair of pressure sensors, one of which is located above the air injection ring (319) and the other of which is located below the air injection ring (319).

23. An RDF waste to energy plant (100) as claimed in any one of claims 15 to 22 in which the pair of oscillating plates (307, 309) are star shaped.

24. An RDF waste to energy plant (100) as claimed in claim 23 in which the circumferential edge (403, 405) of each of the oscillating plates (307, 309) has a wave configuration.

25. An RDF waste to energy plant (100) as claimed in claim 24 in which the diameter of the upper oscillating plate (307) is smaller than the diameter of the lower oscillating plate (309) and in which the peaks of the upper oscillating plate coincide with the troughs of the lower oscillating plate.

26. An RDF waste to energy plant (100) as claimed in any one of claims 15 to 25 in which the fuel outlet (305) comprises a frusto-conical shaped fuel nozzle (303) located centrally in the combustion chamber (300) relative the sides of the combustion chamber.

27. An RDF waste to energy plant (100) as claimed in any one of claims 15 to 26 in which the air injecting ring (319) surrounds the fuel nozzle (303), and comprises a plurality of air nozzles (321) through which air is delivered towards the centre of the combustion chamber (300).

28. An RDF waste to energy plant (100) as claimed in claim 27 in which the plurality of air nozzles (321) are inclined, downwardly depending towards the active fluid ash bed.

29. An RDF waste to energy plant (100) as claim in claim 27 or 28 in which the plurality of air nozzles (321) are circumferentially spaced about the air injection ring (319).

30. An RDF waste to energy plant (100) as claimed in claim 29 in which the plurality of air nozzles (321) are spaced apart by a distance between 0.05m and 0.12m.

31. An RDF waste to energy plant (100) as claimed in any one of claims 27 to 30 in which each of the air nozzles (321) has nozzle outlet diameter of between 0.004m and 0.015m.

32. An RDF waste to energy plant (100) as claimed in any one of claims 15 to 31 in which the ash removal stage (109) comprises a water-filled wet ash removal stage beneath the pair of oscillating plates.

33. An RDF waste to energy plant (100) as claimed in claim 32 in which the water from the wet ash removal stage is delivered to the flue scrubber (111) for use in neutralizing flue gasses and removing heavy metals in the flue gas.

34. An RDF waste to energy plant (100) as claimed in any one of claims 15 to 33 in which the generator comprises an Organic Rankine Cycle (ORC) generator.

35. An RDF waste to energy plant (100) as claimed in any one of claims 15 to 34 in which the flue gas scrubber (111) comprises a condenser and a waste water filter.

36. An RDF waste to energy plant (100) as claimed in any one of claims 15 to 35 in which the bottom plate (309) of the pair of oscillating plates oscillates between 0.40m and 0.60m, and the top plate (307) of the pair of oscillating plates oscillates between 0.2m and 0.4m respectively.

37. An RDF waste to energy plant (100) as claimed in any one of claims 15 to 36 in which there are provided clinker breakers on the underside of the air injection ring (319).

38. An RDF waste to energy plant (100) as claimed in any one of claims 15 to 37 in which the distance between the air injection ring (319) and the top plate (307) of the pair of oscillating plates is between 0.05m and 0.12m.

39. A method of operating a combustion chamber (300) of an RDF waste to energy plant (100) comprising the steps of: providing an active fluid ash bed with a pair of oscillating plates (307, 309), the oscillating plates superimposed one on top of the other; oscillating the pair of oscillating plates; monitoring the depth of ash of the fluid ash bed on the oscillating plates; and controlling the intake of fuel into the combustion chamber (300) to prevent the depth of the active fluid ash bed exceeding a set fluid bed depth parameter.

40. A method of operating a combustion chamber (300) of an RDF waste to energy plant (100) as claimed in claim 39 in which the method comprises the step of monitoring the temperature of the combustion chamber (300) and injecting air into the combustion chamber in order to keep the temperature at or above a desired temperature parameter.

41. A method of operating a combustion chamber (300) of an RDF waste to energy plant (100) as claimed in claim 40 in which the air is injected into the combustion chamber horizontally or inclined downwardly towards the fluid ash bed.

## Patentansprüche

1. Brennkammer (300) für ein RDF-Abfall-zu-Energie-Kraftwerk, umfassend: einen Brennstoffeinlass zur Aufnahme von Brennstoff; einen Brennstoffauslass (305) zur Abgabe von Brennstoff in die Brennkammer; einen Ascheauslass; wobei die Brennkammer (300) konfiguriert ist, um ein aktives Fluidaschebett mit einem Paar oszillierender Platten (307, 309) bereitzustellen, wobei die oszillierenden Platten (307, 309) übereinander angeordnet sind; einen Lufteinblasring (319), der oberhalb des Paars oszillierender Platten (207, 309) positioniert und von diesen beabstandet ist; mindestens einen Sensor, der betriebsfähig ist, um die Tiefe des aktiven Fluidaschebettes zu messen; und eine Steuerung, die auf den mindestens einen Sensor reagiert und betriebsfähig ist, um die Tiefe des aktiven Fluidaschebettes zu steuern.

2. Brennkammer (300) für ein RDF-Abfall-zu-Energie-Kraftwerk nach Anspruch 1, bei dem die Steuerung, die betriebsfähig ist, um die Tiefe des aktiven Fluidaschebettes zu steuern, Mittel umfasst, um die Geschwindigkeit der Oszillation der oszillierenden Platten (307, 309) zu steuern.

3. Brennkammer (300) für ein RDF-Abfall-zu-Energie-Kraftwerk nach Anspruch 1 oder 2, bei dem die Steuerung, die betriebsfähig ist, um die Tiefe des aktiven Fluidaschebettes zu steuern, Mittel umfasst, um die Zufuhrrate von Brennstoff in die Brennkammer zu steuern.

4. Brennkammer (300) für ein RDF-Abfall-zu-Energie-Kraftwerk nach einem der Ansprüche 1 bis 3, bei dem der mindestens eine Sensor, der betriebsfähig ist, um die Tiefe des aktiven Fluidaschebettes zu messen, ein Paar Drucksensoren umfasst, von denen sich einer oberhalb des Lufteinblasrings (819) und der andere unterhalb des Lufteinblasrings (319) befindet.

5. Brennkammer (300) für ein RDF-Abfall-zu-Energie-Kraftwerk nach einem der Ansprüche 1 bis 4, bei dem das Paar oszillierender Platten (307, 309) sternförmig ist.

6. Brennkammer (300) für ein RDF-Abfall-zu-Energie-Kraftwerk nach einem der Ansprüche 1 bis 5, bei dem die Umfangskante (403, 405) jeder der oszillierenden Platten (307, 309) eine Wellenkonfiguration aufweist.

7. Brennkammer (300) für ein RDF-Abfall-zu-Energie-Kraftwerk nach einem der Ansprüche 1 bis 6, bei dem der Durchmesser der oberen oszillierenden Platte (307) kleiner ist als der Durchmesser der unteren oszillierenden Platte (309) und bei dem die Spitzen der oberen oszillierenden Platte mit den Mulden der unteren oszillierenden Platte zusammenfallen.

8. Brennkammer (300) für ein RDF-Abfall-zu-Energie-Kraftwerk nach einem der Ansprüche 1 bis 7, bei dem der Brennstoffauslass (305) eine kegelstumpfförmige Brennstoffdüse (303) umfasst, die sich zentral in der Brennkammer (300) relativ zu den Seiten der Brennkammer befinden.

9. Brennkammer (300) für ein RDF-Abfall-zu-Energie-Kraftwerk nach einem der Ansprüche 1 bis 8, bei dem der Lufteinblasring (319) den Brennstoffauslass (305) umgibt und eine Vielzahl von Luftdüsen (321) umfasst, durch die Luft in Richtung der Mitte der Brennkammer zugeführt wird.

10. Brennkammer (300) für ein RDF-Abfall-zu-Energie-Kraftwerk nach einem der Ansprüche 1 bis 9, bei dem die Vielzahl von Luftdüsen (321) schräg nach unten in Richtung des aktiven Fluidaschebettes gerichtet sind.

11. Brennkammer (300) für ein RDF-Abfall-zu-Energie-Kraftwerk nach einem der Ansprüche 1 bis 10, bei dem die Vielzahl von Luftdüsen (321) in Umfangsrichtung um den Lufteinblasring (319) herum beabstandet sind.

12. Brennkammer (300) für ein RDF-Abfall-zu-Energie-Kraftwerk nach einem der Ansprüche 1 bis 11, bei dem die untere Platte (309) des Paares oszillierender Platten (307, 309) zwischen 0,40 m und 0,60 m oszilliert und die obere Platte (307) des Paares oszillierender Platten (807, 309) zwischen 0,2 m und 0,4 m oszilliert.

13. Brennkammer (300) für ein RDF-Abfall-zu-Energie-Kraftwerk nach einem der Ansprüche 1 bis 12, bei dem an der Unterseite des Lufteinblasrings (319) Klinkerbrecher bereitgestellt sind.

14. Brennkammer (300) für ein RDF-Abfall-zu-Energie-Kraftwerk nach einem der Ansprüche 1 bis 13, bei dem die Entfernung zwischen dem Lufteinblasring (319) und der oberen Platte (307) des Paares oszillierender Platten (307, 309) zwischen 0,05 m und 0,12 m beträgt.

15. Abfall-aus-Abfallbrennstoff- (Refuse Derived Fuel, RDF) zu-Energie-Kraftwerk (100), umfassend:
einen Brennstofftrichter (201);
ein Brennstoffzufuhrsystem (101);
eine Brennstufe (103);
eine Nachbrennstufe (105), wobei die Nachbrennstufe einschließt: einen Generator (107); eine Ascheentfernungsstufe (109); und bei dem die Brennstufe umfasst:
eine Brennkammer (300), wobei die Brennkammer aufweist: einen Brennstoffeinlass zur Aufnahme von Brennstoff aus dem Brennstofftrichter, der von dem Brennstoffzufuhrsystem zugeführt wird; einen Brennstoffauslass (305) zur Abgabe des Brennstoffs in die Brennkammer; und einen Ascheauslass zur Abgabe von Asche an die Ascheentfernungsstufe; **dadurch gekennzeichnet, dass**:
die Nachbrennstufe ferner einen Rauchgaswäscher (111) umfasst; und bei der die Brennkammer die Brennkammer (300) nach Anspruch 1 ist.

16. RDF-Abfall-zu-Energie-Kraftwerk (100) nach Anspruch 15, bei dem die Steuerung, die betriebsfähig ist, um die Tiefe des aktiven Fluidaschebettes zu steuern, Mittel umfasst, um die Geschwindigkeit der Oszillation der oszillierenden Platten (307, 309) zu steuern.

17. RDF-Abfall-zu-Energie-Kraftwerk (100) nach Anspruch 15 oder 16, bei dem die Steuerung, die betriebsfähig ist, um die Tiefe des aktiven Fluidaschebettes zu steuern, Mittel umfasst, um die Geschwindigkeit der Brennstoffzufuhr vom Brennstoffzufuhrsystem (101) zur Brennstufe (103) zu steuern.

18. RDF-Abfall-zu-Energie-Kraftwerk (100) nach einem der Ansprüche 15 bis 17, bei dem die Brennstufe (103) ferner einen Vorkonditionierer (203) umfasst.

19. RDF-Abfall-zu-Energie-Kraftwerk (100) nach Anspruch 18, bei dem der Vorkonditionierer (203) betriebsfähig ist, um den Brennstoff auf bis zu 250 Grad Celsius zu erwärmen, bevor der Brennstoff in die Brennkammer (300) gelangt.

20. RDF-Abfall-zu-Energie-Kraftwerk (100) nach Anspruch 18 oder 19, bei dem die Wärme aus der Brennkammer (300) zur Verwendung im Vorkonditionierer (203) nutzbar gemacht wird.

21. RDF-Abfall-zu-Energie-Kraftwerk (100) nach Anspruch 18 oder 19, bei dem Wärme vom Generator (107) zur Verwendung im Vorkonditionierer (203) nutzbar gemacht wird.

22. RDF-Abfall-zu-Energie-Kraftwerk (100) nach einem der Ansprüche 15 bis 21, bei dem der mindestens eine Sensor, der betriebsfähig ist, um die Tiefe des aktiven Fluidaschebettes zu messen, ein Paar Drucksensoren umfasst, von denen sich einer oberhalb des Lufteinblasrings (319) und der andere unterhalb des Lufteinblasrings (319) befindet.

23. RDF-Abfall-zu-Energie-Kraftwerk (100) nach einem der Ansprüche 15 bis 22, bei dem das Paar oszillierender Platten (307, 309) sternförmig ist.

24. RDF-Abfall-zu-Energie-Kraftwerk (100) nach einem Anspruch 23, bei dem die Umfangskante (403, 405) jeder der oszillierenden Platten (307, 309) eine Wellenkonfiguration aufweist.

25. RDF-Abfall-zu-Energie-Kraftwerk (100) nach Anspruch 24, bei dem der Durchmesser der oberen oszillierenden Platte (307) kleiner ist als der Durchmesser der unteren oszillierenden Platte (309) und bei dem die Spitzen der oberen oszillierenden Platte mit den Mulden der unteren oszillierenden Platte zusammenfallen.

26. RDF-Abfall-zu-Energie-Kraftwerk (100) nach einem der Ansprüche 15 bis 25, bei dem der Brennstoffauslass (305) eine kegelstumpfförmige Brennstoffdüse (303) umfasst, die sich zentral in der Brennkammer (300) relativ zu den Seiten der Brennkammer befinden.

27. RDF-Abfall-zu-Energie-Kraftwerk (100) nach einem der Ansprüche 15 bis 26, bei dem der Lufteinblasring (319) die Brennstoffdüse (303) umgibt und eine Vielzahl von Luftdüsen (321) umfasst, durch die Luft in Richtung der Mitte der Brennkammer (300) zugeführt wird.

28. RDF-Abfall-zu-Energie-Kraftwerk (100) nach Anspruch 27, bei dem die Vielzahl von Luftdüsen (321) schräg nach unten in Richtung des aktiven Fluidaschebettes gerichtet sind.

29. RDF-Abfall-zu-Energie-Kraftwerk (100) nach Anspruch 27 oder 28, bei dem die Vielzahl von Luftdüsen (821) in Umfangsrichtung um den Lufteinblasring (319) herum beabstandet sind.

30. RDF-Abfall-zu-Energie-Kraftwerk (100) nach Anspruch 29, bei dem die Vielzahl von Luftdüsen (321) in einer Entfernung zwischen 0,05 m und 0,12 m voneinander beabstandet sind.

31. RDF-Abfall-zu-Energie-Kraftwerk (100) nach einem der Ansprüche 27 bis 30, bei dem jede der Luftdüsen (321) einen Düsenauslassdurchmesser zwischen 0,004 m und 0,015 m aufweist.

32. RDF-Abfall-zu-Energie-Kraftwerk (100) nach einem der Ansprüche 15 bis 31, bei dem die Ascheentfernungsstufe (109) eine mit Wasser gefüllte Nassentaschungsstufe unterhalb des Paares oszillierender Platten umfasst.

33. RDF-Abfall-zu-Energie-Kraftwerk (100) nach Anspruch 32, bei dem das Wasser aus der Nassentaschungsstufe dem Rauchgaswäscher (111) zur Verwendung bei der Neutralisierung von Rauchgasen und der Entfernung von Schwermetallen im Rauchgas zugeführt wird.

34. RDF-Abfall-zu-Energie-Kraftwerk (100) nach einem der Ansprüche 15 bis 33, bei dem der Generator einen Organic-Rankine-Cycle- (OCR-) Generator umfasst.

35. RDF-Abfall-zu-Energie-Kraftwerk (100) nach einem der Ansprüche 15 bis 34, bei dem der Rauchgaswäscher (111) einen Kondensator und einen Abwasserfilter umfasst.

36. RDF-Abfall-zu-Energie-Kraftwerk (100) nach einem der Ansprüche 15 bis 35, bei dem die untere Platte (309) des Paares oszillierender Platten zwischen 0,40 m und 0,60 m oszilliert und die obere Platte (307) des Paares oszillierender Platten zwischen 0,2 m und 0,4 m oszilliert.

37. RDF-Abfall-zu-Energie-Kraftwerk (100) nach einem der Ansprüche 15 bis 36, bei dem an der Unterseite des Lufteinblasrings (319) Klinkerbrecher bereitgestellt sind.

38. RDF-Abfall-zu-Energie-Kraftwerk (100) nach einem der Ansprüche 15 bis 37, bei dem die Entfernung zwischen dem Lufteinblasring (319) und der oberen Platte (307) des Paares oszillierender Platten zwischen 0,05 m und 0,12 m beträgt.

39. Verfahren zum Betreiben einer Brennkammer (300) eines RDF-Abfall-zu-Energie-Kraftwerks (100), umfassend die Schritte: Bereitstellen eines aktiven Fluidaschebettes mit einem Paar oszillierender Platten (307, 309), wobei die oszillierenden Platten übereinander angeordnet sind; Oszillieren des Paars oszillierender Platten; Überwachen der Tiefe der Asche des Fluidaschebettes auf den oszillierenden Platten; und Steuern der Zufuhr von Brennstoff in die Brennkammer (300), um zu verhindern, dass die Tiefe des aktiven Fluidaschebettes einen eingestellten Fluidbetttiefenparameter überschreitet.

40. Verfahren zum Betreiben einer Brennkammer (300) eines RDF-Abfall-zu-Energie-Kraftwerk (100) nach Anspruch 39, wobei das Verfahren den Schritt des Überwachens der Temperatur der Brennkammer (300) und des Einblasens von Luft in die Brennkammer umfasst, um die Temperatur auf oder oberhalb eines gewünschten Temperaturparameters zu halten.

41. Verfahren zum Betreiben einer Brennkammer (300) eines RDF-Abfall-zu-Energie-Kraftwerk (100) nach Anspruch 40, bei dem die Luft in die Brennkammer horizontal oder nach unten zum Fluidaschebett hin geneigt eingeblasen wird.

## Revendications

1. Chambre de combustion (300) d'une installation de conversion de déchets RDF en énergie comprenant : une admission de combustible pour la réception de combustible ; une sortie de combustible (305) destinée à distribuer un combustible dans la chambre de combustion ; une sortie de cendres ; la chambre de combustion (300) étant configurée pour fournir un lit fluidisé de cendres actives doté d'une paire de plaques oscillantes (307, 309), les plaques oscillantes (307, 309) étant superposées l'une sur l'autre ; un anneau d'injection d'air (319) positionné au-dessus de la paire de plaques oscillantes (207, 309) et espacé de celle-ci ; au moins un capteur servant à mesurer la profondeur du lit fluidisé de cendres actives ; et un régulateur, réactif à l'au moins un capteur et servant à réguler la profondeur du lit fluidisé de cendres actives.

2. Chambre de combustion (300) d'une installation de conversion de déchets RDF en énergie selon la revendication 1 dans laquelle le régulateur servant à réguler la profondeur du lit fluidisé de cendres actives comprend un moyen de régulation de la vitesse d'oscillation des plaques oscillantes (307, 309).

3. Chambre de combustion (300) d'une installation de conversion de déchets RDF en énergie selon la revendication 1 ou 2 dans laquelle le régulateur servant à réguler la profondeur du lit fluidisé de cendres actives comprend un moyen de régulation du débit de distribution de combustible dans la chambre de combustion.

4. Chambre de combustion (300) d'une installation de conversion de déchets RDF en énergie selon l'une quelconque des revendications 1 à 3 dans laquelle l'au moins un capteur servant à mesurer la profondeur du lit fluidisé de cendres actives comprend une paire de capteurs de pression, l'un étant situé au-dessus de l'anneau d'injection d'air (319) et l'autre en-dessous de l'anneau d'injection d'air (319).

5. Chambre de combustion (300) d'une installation de conversion de déchets RDF en énergie selon l'une quelconque des revendications 1 à 4 dans laquelle la paire de plaques oscillantes (307, 309) a une forme d'étoile.

6. Chambre de combustion (300) d'une installation de conversion de déchets RDF en énergie selon l'une quelconque des revendications 1 à 5 dans laquelle le bord circonférentiel (403, 405) de chacune des plaques oscillantes (307, 309) a une configuration ondulée.

7. Chambre de combustion (300) d'une installation de conversion de déchets RDF en énergie selon l'une quelconque des revendications 1 à 6 dans laquelle le diamètre de la plaque oscillante supérieure (307) est inférieur au diamètre de la plaque oscillante inférieure (309) et dans laquelle les pics de la plaque oscillante supérieure coïncident avec les creux de la plaque oscillante inférieure.

8. Chambre de combustion (300) d'une installation de conversion de déchets RDF en énergie selon l'une quelconque des revendications 1 à 7 dans laquelle la sortie de combustible (305) comprend une buse de combustible de forme tronconique (303) située centralement dans la chambre de combustion (300) par rapport aux côtés de la chambre de combustion.

9. Chambre de combustion (300) d'une installation de conversion de déchets RDF en énergie selon l'une quelconque des revendications 1 à 8 dans laquelle l'anneau d'injection d'air (319) entoure la sortie de combustible (305) et comprend une pluralité de buses d'air (321) par lesquelles de l'air est distribué vers le centre de la chambre de combustion.

10. Chambre de combustion (300) d'une installation de conversion de déchets RDF en énergie selon l'une quelconque des revendications 1 à 9 dans laquelle la pluralité de buses d'air (321) est inclinée, dépendant vers le bas vers le lit fluidisé de cendres actives.

11. Chambre de combustion (300) d'une installation de conversion de déchets RDF en énergie selon l'une quelconque des revendications 1 à 10 dans laquelle les buses d'air de la pluralité de buses d'air (321) sont espacées circonférentiellement autour de l'anneau d'injection d'air (319).

12. Chambre de combustion (300) d'une installation de conversion de déchets RDF en énergie selon l'une quelconque des revendications 1 à 11 dans laquelle la plaque inférieure (309) de la paire de plaques oscillantes (307, 309) oscille entre 0,40 m et 0,60 m, et la plaque supérieure (307) de la paire de plaques oscillantes (307, 309) oscille entre 0,2 m et 0,4 m respectivement.

13. Chambre de combustion (300) d'une installation de conversion de déchets RDF en énergie selon l'une quelconque des revendications 1 à 12 dans laquelle des broyeurs de mâchefer sont fournis sur le dessous de l'anneau d'injection d'air (319).

14. Chambre de combustion (300) d'une installation de conversion de déchets RDF en énergie selon l'une quelconque des revendications 1 à 13 dans laquelle la distance entre l'anneau d'injection d'air (319) et la plaque supérieure (307) de la paire de plaques oscillantes (307, 309) est comprise entre 0,05 m et 0,12 m.

15. Installation de conversion de déchets de combustible dérivé de déchets (RDF) en énergie (100) comprenant :
une trémie à combustible (201) ;
un système de distribution de combustible (101) ;
un étage de combustion (103) ;
un étage de post-combustion (105), l'étage de post-combustion comportant : un générateur (107) ; un étage de récupération de cendres (109) ; et dans laquelle l'étage de combustion comprend :
une chambre de combustion (300), la chambre de combustion présentant : une entrée de combustible destinée à recevoir un combustible depuis la trémie à combustible alimentée par le système de distribution de combustible ; une sortie de combustible (305) destinée à distribuer le combustible dans la chambre de combustion ; et une sortie de cendres destinée à distribuer des cendres à l'étage de récupération de cendres ; **caractérisée en ce que** :
l'étage de post-combustion comprend en outre un épurateur de gaz de combustion (111) ; et
dans laquelle
la chambre de combustion est la chambre de combustion (300) selon la revendication 1.

16. Installation de conversion de déchets RDF en énergie (100) selon la revendication 15 dans laquelle le régulateur servant à réguler la profondeur du lit fluidisé de cendres actives comprend un moyen de régulation de la vitesse d'oscillation des plaques oscillantes (307, 309).

17. Installation de conversion de déchets RDF en énergie (100) selon la revendication 15 ou 16 dans laquelle le régulateur servant à réguler la profondeur du lit fluidisé de cendres actives comprend un moyen de régulation du débit de distribution du combustible du système de distribution de combustible (101) jusqu'à l'étage de combustion (103).

18. Installation de conversion de déchets RDF en énergie (100) selon l'une quelconque des revendications 15 à 17 dans laquelle l'étage de combustion (103) comprend en outre un pré-conditionneur (203).

19. Installation de conversion de déchets RDF en énergie (100) selon la revendication 18 dans laquelle le pré-conditionneur (203) sert à chauffer le combustible jusqu'à 250 degrés Celsius avant l'entrée du combustible dans la chambre de combustion (300).

20. Installation de conversion de déchets RDF en énergie (100) selon la revendication 18 ou 19 dans laquelle de la chaleur est captée à partir de la chambre de combustion (300) en vue de son utilisation dans le pré-conditionneur (203).

21. Installation de conversion de déchets RDF en énergie (100) selon la revendication 18 ou 19 dans laquelle de la chaleur est captée à partir du générateur (107) en vue de son utilisation dans le pré-conditionneur (203).

22. Installation de conversion de déchets RDF en énergie (100) selon l'une quelconque des revendications 15 à 21 dans laquelle l'au moins un capteur servant à mesurer la profondeur du lit fluidisé de cendres actives comprend une paire de capteurs de pression, l'un étant situé au-dessus de l'anneau d'injection d'air (319) et l'autre en-dessous de l'anneau d'injection d'air (319).

23. Installation de conversion de déchets RDF en énergie (100) selon l'une quelconque des revendications 15 à 22 dans laquelle la paire de plaques oscillantes (307, 309) a la forme d'une étoile.

24. Installation de conversion de déchets RDF en énergie (100) selon la revendication 23 dans laquelle le bord circonférentiel (403, 405) de chacune des plaques oscillantes (307, 309) a une configuration ondulée.

25. Installation de conversion de déchets RDF en énergie (100) selon la revendication 24 dans laquelle le diamètre de la plaque oscillante supérieure (307) est inférieur au diamètre de la plaque oscillante inférieure (309) et dans laquelle les pics de la plaque oscillante supérieure coïncident avec les creux de la plaque oscillante inférieure.

26. Installation de conversion de déchets RDF en énergie (100) selon l'une quelconque des revendications 15 à 25 dans laquelle la sortie de combustible (305) comprend une buse de combustible de forme tronconique (303) située centralement dans la chambre de combustion (300) par rapport aux côtés de la chambre de combustion.

27. Installation de conversion de déchets RDF en énergie (100) selon l'une quelconque des revendications 15 à 26 dans laquelle l'anneau d'injection d'air (319) entoure la buse de combustible (303) et comprend une pluralité de buses d'air (321) par lesquelles de l'air est distribué vers le centre de la chambre de combustion (300).

28. Installation de conversion de déchets RDF en énergie (100) selon la revendication 27 dans laquelle la pluralité de buses d'air (321) est inclinée, dépendant vers le bas vers le lit fluidisé de cendres actives.

29. Installation de conversion de déchets RDF en énergie (100) selon la revendication 27 ou 28 dans laquelle les buses de la pluralité de buses d'air (321) sont espacées circonférentiellement autour de l'anneau d'injection d'air (319).

30. Installation de conversion de déchets RDF en énergie (100) selon la revendication 29 dans laquelle les buses de la pluralité des buses d'air (321) sont espacées d'une distance comprise entre 0,05 m et 0,12 m.

31. Installation de conversion de déchets RDF en énergie (100) selon l'une quelconque des revendications 27 à 30 dans laquelle chacune des buses d'air (321) a un diamètre de sortie de buse compris entre 0,004 m et 0,015 m.

32. Installation de conversion de déchets RDF en énergie (100) selon l'une quelconque des revendications 15 à 31 dans laquelle l'étage de récupération de cendres (109) comprend un étage de récupération de cendres humides rempli d'eau sous la paire de plaques oscillantes.

33. Installation de conversion de déchets RDF en énergie (100) selon la revendication 32 dans laquelle l'eau de l'étage de récupération de cendres humide est distribuée à l'épurateur de gaz de combustion (111) en vue de son utilisation pour neutraliser les gaz de combustion et récupérer les métaux lourds présents dans les gaz de combustion.

34. Installation de conversion de déchets RDF en énergie (100) selon l'une quelconque des revendications 15 à 33 dans laquelle le générateur comprend un générateur à cycle de Rankine organique (ORC).

35. Installation de conversion de déchets RDF en énergie (100) selon l'une quelconque des revendications 15 à 34 dans laquelle l'épurateur de gaz de combustion (111) comprend un condenseur et un filtre des eaux usées.

36. Installation de conversion de déchets RDF en énergie (100) selon l'une quelconque des revendications 15 à 35 dans laquelle la plaque inférieure (309) de la paire de plaques oscillantes oscille entre 0,40 m et 0,60 m, et la plaque supérieure (307) de la paire de plaques oscillantes oscille entre 0,2 m et 0,4 m respectivement.

37. Installation de conversion de déchets RDF en énergie (100) selon l'une quelconque des revendications 15 à 36 dans laquelle des broyeurs de mâchefer sont fournis sur le dessous de l'anneau d'injection d'air (319).

38. Installation de conversion de déchets RDF en énergie (100) selon l'une quelconque des revendications 15 à 37 dans laquelle la distance entre l'anneau d'injection d'air (319) et la plaque supérieure (307) de la paire de plaques oscillantes est comprise entre 0,05 m et 0,12 m.

39. Procédé d'exploitation d'une chambre de combustion (300) d'une installation de conversion de déchets RDF en énergie (100) comprenant les étapes de : fourniture d'un lit fluidisé de cendres actives doté d'une paire de plaques oscillantes (307, 309), les plaques oscillantes étant superposées l'une sur l'autre ; oscillation de la paire de plaques oscillantes ; surveillance de la profondeur de cendres du lit fluidisé de cendres sur les plaques oscillantes ; et régulation de l'admission de combustible dans la chambre de combustion (300) afin d'empêcher la profondeur du lit fluidisé de cendres actives de dépasser un paramètre de profondeur de lit fluidisé défini.

40. Procédé d'exploitation d'une chambre de combustion (300) d'une installation de conversion de déchets RDF en énergie (100) selon la revendication 39, le procédé comprenant la surveillance de la température de la chambre de combustion (300) et l'injection d'air dans la chambre de combustion afin de maintenir la température égale ou supérieure à un paramètre de température souhaité.

41. Procédé d'exploitation d'une chambre de combustion (300) d'une installation de conversion de déchets RDF en énergie (100) selon la revendication 40 dans lequel l'air est injecté dans la chambre de combustion horizontalement ou incliné vers bas vers le lit fluidisé de cendres.
